# EUROPÄISCHE PATENTSCHRIFT

(11) **EP 3 517 903 B1**
(45) Veröffentlichungstag und Bekanntmachung des Hinweises auf die Patenterteilung: **04.08.2021**
(21) Anmeldenummer: 18153392.8
(22) Anmeldetag: 25.01.2018
(51) Int. Cl.: G01F 25/00, G01F 15/00, G01F 15/06, G01N 9/00, G01L 27/00, G01F 23/00

(54) **MESSANORDNUNG UND MESSVERFAHREN FÜR FÜLLSTANDMESSUNGEN**
MEASURING DEVICE AND MEASURING METHOD FOR LEVEL MEASUREMENT
DISPOSITIF DE MESURE ET PROCÉDÉ DE MESURE DESTINÉS À MESURER LE NIVEAU DE REMPLISSAGE

(43) Veröffentlichungstag der Anmeldung: 31.07.2019
(73) Patentinhaber: VEGA Grieshaber KG, 77709 Wolfach (DE)
(72) Erfinder: LAUN, Robert, 77756 Hausach (DE)
(74) Vertreter: Maiwald Patent- und Rechtsanwaltsgesellschaft mbH

(56) Entgegenhaltungen:
- DE-A1-102012 100 936
- DE-A1-102013 107 707
- DE-B3-102016 108 594
- GB-A- 2 409 282
- US-A1- 2006 132 351
- US-A1- 2016 198 246

## Beschreibung

### Gebiet der Erfindung

Allgemein betrifft die vorliegende Erfindung das Gebiet der Automatisierungstechnik und/oder Prozessautomation. Insbesondere betrifft die vorliegende Erfindung eine Messanordnung zum Erfassen eines Füllstandes, einer Dichte, eines Durchflusses und/oder eines Druckes eines Mediums in einem Behälter sowie ein Messsystem mit einer solchen Messanordnung. Ferner betrifft die Erfindung ein Verfahren zum Parametrieren eines Messgeräts.

### Hintergrund der Erfindung

In der Automatisierungstechnik werden Feldgeräte, Messgeräte und/oder Sensoren zum Erfassen einer Vielzahl von Prozessgrößen, wie etwa eines Füllstandes, einer Dichte, eines Durchflusses und/oder eines Druckes eines Mediums, an einer Vielzahl unterschiedlicher Behältern eingesetzt. Um ein mit dem Messgerät erfasstes Messsignal auswerten und um aussagekräftige Werte der zu ermittelnden Prozessgrößen bestimmen zu können, kann es erforderlich sein, eine für den jeweiligen Behälter und/oder eine für das darin bevorratete Medium geeignete Parametrierung und/oder geeignete Parametrierdaten in dem jeweiligen Messgerät zu hinterlegen.

Wird etwa das Messgerät, der Behälter und/oder das zu messende Medium ausgetauscht, so kann es daher erforderlich sein, auch die Parametrierung und/oder die Parametrierdaten in dem jeweiligen Messgerät zu ändern, was mit einem erheblichen Aufwand verbunden sein kann.

Dokument DE 10 2016 108 594 B3 beschreibt ein Verfahren zur Ermittlung des Füllstandes eines Mediums in einem Behälter, wobei Zusatzinformationen von im Behälter befindlichen Transpondern ausgelesen werden.

Dokument US 2016/0198246 beschreibt einen in einer Trinkflasche angeordneten Füllstandsensor, welcher seine Konfiguration senden oder eine neue Konfiguration empfangen kann.

### Zusammenfassung der Erfindung

Mit Ausführungsformen der Erfindung kann in vorteilhafter Weise eine Messanordnung und/oder ein Messsystem zum Ermitteln eines Füllstandes, einer Dichte, eines Durchflusses und/oder eines Druckes eines Mediums in einem Behälter verbessert werden.

Ein erster Aspekt der Erfindung betrifft gemäß dem angefügten unabhängigen Patentanspruch 1 eine Messanordnung, welche ein Messgerät zum Erfassen eines Füllstandes, einer Dichte, eines Durchflusses und/oder eines Druckes eines Mediums in einem Behälter aufweist. Weiter weist die Messanordnung ein Spezifikationsmodul auf, welches dazu ausgeführt ist, örtlich getrennt und/oder separat von dem Messgerät an einem Behälter befestigt zu werden. Dabei weist das Spezifikationsmodul behälterspezifische Daten zur Spezifikation des Behälters und/oder zur Spezifikation eines Mediums in dem Behälter auf. Das Messgerät weist ferner ein drahtloses Kommunikationsmodul auf, wobei das Messgerät und/oder das Kommunikationsmodul dazu eingerichtet ist, ein Spezifikationssignal zu empfangen, welches mit den behälterspezifischen Daten des Spezifikationsmoduls korreliert und/oder korrespondiert. Alternativ oder zusätzlich kann das Spezifikationssignal die behälterspezifischen Daten repräsentieren und/oder die behälterspezifischen Daten können in dem Spezifikationssignal enthalten und/oder kodiert sein. Das Messgerät ist dazu eingerichtet, basierend auf dem Spezifikationssignal dem Behälter und/oder dem Medium zugeordnete Parametrierdaten in dem Messgerät zu aktivieren. Hierzu kann das Messgerät beispielsweise einen Speicher mit Softwareinstruktionen aufweisen, welche etwa von einem Prozessor des Messgeräts ausgeführt werden können und so das Messgerät dazu veranlassen können, das Spezifikationssignal zu verarbeiten und die Parametrierdaten zu aktivieren.

Das Aktivieren der Parametrierdaten in dem Messgerät kann etwa bedeuten, dass die Parametrierdaten in das Messgerät, beispielsweise in einen Speicher und/oder einen Arbeitsspeicher des Messgeräts, geladen werden, so dass das Messgerät unter Verwendung dieser Parametrierdaten den Füllstand, die Dichte, den Durchfluss und/oder den Druck des Mediums in dem Behälter mit hoher Präzision bestimmen kann. Gleichsam kann das Aktivieren der Parametrierdaten bedeuten, dass das Messgerät ein Messsignal basierend auf und/oder unter Berücksichtigung der Parametrierdaten auswertet, um den Füllstand, die Dichte, den Durchfluss und/oder den Druck des Mediums zu bestimmen.

Erfindungsgemäß ist daher vorgesehen, ein Spezifikationsmodul separat von dem eigentlichen Messgerät an einem Behälter anzuordnen und in dem Spezifikationsmodul behälterspezifische Daten zu hinterlegen, zu verwalten und/oder darin zu kodieren. Das Spezifikationsmodul und das Messgerät können somit voneinander unabhängige Bauteile sein, welche an unterschiedlichen Orten des Behälters angeordnet werden können. Basierend auf den behälterspezifischen Daten kann dem Messgerät über das Kommunikationsmodul das Spezifikationssignal übermittelt werden und das Messgerät kann sodann die für den jeweiligen Behälter und/oder das jeweilige Medium vorgesehenen Parametrierdaten ermitteln, laden und/oder aktivieren. Auf diese Weise kann sichergestellt sein, dass die behälterspezifischen Daten stets zumindest teilweise an dem jeweiligen Behälter zur Verfügung stehen und zur Bestimmung der dem jeweiligen Behälter und/oder dem jeweiligen Medium zugeordneten Parametrierdaten verwendet werden können. Insbesondere bei einem Austausch eines Messgerätes, bei einem Austausch des Behälters und/oder bei einem Austausch des Mediums kann dies vorteilhaft sein, da die dem Behälter und/oder dem Medium zugeordnete Parametrierdaten schnell und zuverlässig auf ein weiteres Messgerät, etwa ein Standardmessgerät und/oder ein Ersatzgerät, übertragen werden können.

Die behälterspezifischen Daten können beispielsweise eine Behälterspezifikation des Behälters, eine Behälterkennung des Behälters, eine Seriennummer des Behälters, eine Geometrie des Behälters, eine Abmessung des Behälters, eine Höhe des Behälters, ein Volumen des Behälters, ein Leergewicht des Behälters, eine Spezifikation des in dem Behälter bevorrateten Mediums, eine Dichte des in dem Behälter bevorrateten Mediums, eine Konzentration eines Bestandteils des Mediums und/oder eine Standortinformation des Behälters umfassen. Mit anderen Worten können die behälterspezifischen Daten sämtliche mit dem Behälter, dem Medium und/oder mit der zu bestimmenden Messgröße, wie z.B. dem Füllstand, der Dichte, dem Durchfluss und/oder dem Druck, in Zusammenhang stehenden Daten umfassen.

Die Parametrierdaten können eine Parametrierung des Messgeräts bezeichnen. Allgemein können die Parametrierdaten und/oder die Parametrierung dazu dienen, das Messgerät auf die jeweilige Messumgebung, den jeweiligen Behälter und/oder das jeweilige Medium abzustimmen, damit der Füllstand, die Dichte, der Durchfluss und/oder der Druck des Mediums in dem Behälter mit hoher Präzision unter Auswertung eines mit dem Messgerät erfassten Messsignal bestimmt werden kann. Hierzu können die Parametrierdaten Werte eines oder mehrerer Parameter, insbesondere messrelevanter Parameter, umfassen. Beispielsweise können die Parametrierdaten ein Störechoprofil des Behälters, ein Leerprofil des Behälters, eine Messbereichsangabe und/oder eine Linearisierungstabelle zur Umrechnung einer Distanz zu einer Oberfläche des Mediums in eine Füllhöhe des Mediums umfassen. Auch können die Parametrierdaten beliebige andere mit der eigentlichen Messung und/oder der Messgröße in Zusammenhang stehende Daten und/oder Parameterwerte umfassen.

Gemäß einer Ausführungsform der Erfindung sind die behälterspezifischen Daten und/oder die Parametrierdaten zumindest teilweise, insbesondere vollständig, in einem Speicher des Spezifikationsmoduls hinterlegt. Mit anderen Worten kann ein Inhalt eines Speichers des Messgeräts zumindest teilweise auf den Speicher des Spezifikationsmoduls ausgelagert sein. Alternativ oder zusätzlich kann das Messgerät dazu eingerichtet sein, die behälterspezifischen Daten und/oder die Parametrierdaten zumindest teilweise aus einem Speicher des Spezifikationsmoduls auszulesen. Hierzu weist das Spezifikationsmodul erfindungsgemäß einen RFID-Transponder und das Messgerät ein RFID-Modul zum Auslesen des Speichers des Spezifikationsmoduls auf. Allgemein kann das Spezifikationsmodul ein Behälterkommunikationsmodul aufweisen, über welches der Speicher des Spezifikationsmoduls durch das Messgerät ausgelesen werden kann. Auf diese Weise kann sichergestellt sein, dass in dem an dem Behälter angeordneten Spezifikationsmodul stets die behälterspezifischen Daten und/oder die dem Behälter zugeordneten Parametrierdaten bereitgestellt sind. Wird etwa das Messgerät ausgetauscht, so kann ein neues Messgerät durch Auslesen des Speichers des Spezifikationsmoduls schnell und kosteneffizient in Betrieb genommen werden. Auch kann das Messgerät an unterschiedlichen Behältern angeordnet werden und hat so stets die dem jeweiligen Behälter zugeordneten Parametrierdaten über das an dem jeweiligen Behälter angeordnete Spezifikationsmodul zur Verfügung. Dabei muss das Messgerät insbesondere nicht vorab durch Personal, beispielsweise über einen Computer, aufwändig parametriert werden, was Personalkosten und einen Zeitaufwand für die Parametrierung erheblich reduzieren kann.

Gemäß einer Ausführungsform der Erfindung sind die dem Behälter zugeordneten Parametrierdaten zumindest teilweise, insbesondere vollständig, in einem Speicher des Messgeräts hinterlegt, wobei das Messgerät dazu eingerichtet ist, basierend auf dem Spezifikationssignal die dem Behälter zugeordneten Parametrierdaten zu ermitteln und/oder zu aktivieren. In dem Speicher des Messgeräts können etwa mehrere unterschiedliche Parametrierdaten für unterschiedliche Behälter und/oder Medien hinterlegt sein. Basierend auf dem Spezifikationssignal kann das Messgerät die einem bestimmten Behälter, etwa die dem zu vermessenden Behälter, zugeordneten Parametrierdaten identifizieren und diese laden, um unter Verwendung dieser Parametrierdaten und unter Auswertung eines mit dem Messgerät erfassten Messsignals den Füllstand, die Dichte, den Durchfluss und/oder den Druck des Mediums in dem Behälter mit hoher Präzision bestimmen zu können.

Gemäß der Erfindung sind die dem Behälter zugeordneten Parametrierdaten zumindest teilweise, insbesondere vollständig, in einem Speicher eines Servers hinterlegt, wobei das Messgerät dazu eingerichtet ist, basierend auf dem Spezifikationssignal die dem Behälter zugeordneten Parametrierdaten zumindest teilweise von dem Server herunterzuladen. Hierzu kann das Messgerät beispielsweise eine Anfrage an den Server schicken, welche diesen veranlassen kann, die dem Behälter zugeordneten Parametrierdaten an das Messgerät zu übermitteln und/oder zu senden. Derart kann ein Speicher des Messgeräts teilweise oder vollständig auf den Server ausgelagert sein.

Gemäß einer Ausführungsform der Erfindung weist das Spezifikationsmodul ein Behälterkommunikationsmodul auf, wobei das Messgerät dazu eingerichtet ist, über das Behälterkommunikationsmodul eine drahtlose Kommunikationsverbindung zu dem Spezifikationsmodul herzustellen und/oder das Spezifikationssignal von dem Spezifikationsmodul zu empfangen. Mit anderen Worten können das Kommunikationsmodul des Messgeräts und das Behälterkommunikationsmodul des Spezifikationsmoduls eine drahtlose Kommunikationsverbindung zwischen dem Messgerät und dem Spezifikationsmodul ermöglichen. Gleichsam kann der Behälter durch das Spezifikationsmodul intelligent ausgestaltet werden und das Messgerät kann über das Spezifikationsmodul eine Kommunikationsverbindung mit dem Behälter herstellen. Die Kommunikationsverbindung kann dabei unidirektional oder bidirektional sein. Das Behälterkommunikationsmodul und/oder das Kommunikationsmodul des Messgeräts können beispielsweise jeweils ein WLAN-Modul, ein Funkmodul, einen RFID-Transponder, ein RFID-Modul und/oder ein Bluetoothmodul aufweisen.

Gemäß einer Ausführungsform der Erfindung weist das Spezifikationsmodul einen QR-Code, einen Barcode, ein WLAN-Modul, ein Bluetoothmodul und/oder einen RFID-Transponder auf.

Gemäß einer Ausführungsform der Erfindung weist das Spezifikationsmodul einen QR-Code und/oder einen Barcode auf, in welchem die behälterspezifischen Daten kodiert sind und welcher mit einem tragbaren Benutzergerät ausgelesen werden kann. Das tragbare Benutzergerät kann etwa ein Mobiltelefon, ein Handheld, ein Tablet-PC, ein Notebook und/oder ein beliebiges anderes Benutzergerät sein. Mit dem Benutzergerät können die behälterspezifischen Daten visuell erkannt und/oder ausgelesen werden, etwa mit einer Kamera des Benutzergeräts. Das Benutzergerät kann sodann den QR-Code und/oder den Barcode dekodieren und/oder auslesen sowie das Spezifikationssignal generieren. Das Spezifikationssignal kann dann von dem Benutzergerät an das Messgerät übermittelt werden, wobei das Kommunikationsmodul und/oder das Messgerät dazu eingerichtet sein kann, das Spezifikationssignal von dem tragbaren Benutzergerät zu empfangen. Auch ist denkbar, dass das Messgerät selbst den QR-Code und/oder den Barcode erkennen und/oder auslesen kann. Hierzu kann das Messgerät etwa über eine Kamera verfügen und/oder mit einer Kamera verbunden werden.

Gemäß der Erfindung weist das Spezifikationsmodul einen RFID-Transponder und einen Speicher zum Hinterlegen der behälterspezifischen Daten auf, wobei das Kommunikationsmodul des Messgeräts ein RFID-Modul zum Lesen und/oder Beschreiben des Speichers des Spezifikationsmoduls aufweist. Der RFID-Transponder kann etwa einen RFID-Tag und/oder ein RFID-Etikett bezeichnen. Der RFID-Transponder kann dabei Teil eines Behälterkommunikationsmoduls des Spezifikationsmoduls sein. Der RFID-Transponder kann als aktiver Transponder ausgestaltet sein und unabhängig von dem Messgerät mit elektrischer Energie versorgt werden. Auch kann der RFID-Transponder als passiver Transponder ausgebildet sein und durch ein Signal des RFID-Moduls mit elektrischer Energie versorgt werden. Über den RFID-Transponder und das RFID-Modul kann energieeffizient und zuverlässig eine drahtlose Kommunikationsverbindung zwischen dem Messgerät und dem Spezifikationsmodul hergestellt werden und die behälterspezifischen Daten können in Form des Spezifikationssignals zuverlässig drahtlos an das Messgerät übermittelt werden.

Gemäß einer Ausführungsform der Erfindung weist das Spezifikationsmodul einen Speicher auf, in welchem eine Betriebssoftware des Messgeräts, eine Betriebsanleitung des Messgeräts und/oder während einer Inbetriebnahme des Messgeräts erstellte Notizen hinterlegt sind. Alternativ oder zusätzlich ist das Messgerät dazu eingerichtet, eine Betriebssoftware des Messgeräts, eine Betriebsanleitung des Messgeräts und/oder während einer Inbetriebnahme des Messgeräts erstellte Notizen zumindest teilweise aus einem Speicher des Spezifikationsmoduls auszulesen. Die Betriebssoftware kann etwa eine Firmware des Messgeräts bezeichnen. Durch Hinterlegen der Betriebssoftware, der Betriebsanleitung und/oder der während einer Inbetriebnahme erstellten Notizen kann sichergestellt sein, dass alle für eine Inbetriebnahme eines neuen Messgeräts bzw. Ersatzgeräts erforderlichen Informationen in dem Spezifikationsmodul an dem Behälter verwaltet sind. Im Falle eines defekten Messgeräts, kann so schnell und mit geringem Installationsaufwand ein Ersatzgerät in Betrieb genommen werden.

Gemäß der Erfindung ist das Spezifikationsmodul zur Befestigung an dem Behälter zumindest teilweise selbstklebend und/oder selbsthaftend ausgestaltet. Beispielsweise kann das Spezifikationsmodul eine Klebefolie zur Befestigung an dem Behälter aufweisen. Auch kann das Spezifikationsmodul zumindest teilweise magnetisch ausgebildet sein und mittels Magnetkraft an dem Behälter befestigt werden. Dabei kann das Spezifikationsmodul dazu ausgeführt sein, zumindest teilweise an einer Außenseite des Behälters angebracht zu werden.

Gemäß einer Ausführungsform der Erfindung ist das Messgerät ein radarbasiertes Füllstandmessgerät. Insbesondere kann das Messgerät als FMCW (Frequency Modulated Continuous Wave) Radarfüllstandmessgerät ausgebildet sein. Alternativ oder zusätzlich kann das Messgerät als Zwei-Leiter-Messgerät, etwa als 4-20 mA Zwei-Leiter-Messgerät, ausgeführt sein. Dadurch kann ein Messwert in vorteilhafter Weise als Stromsignal über eine Versorgungsleitung des Messgeräts übertragen werden.

Ein zweiter Aspekt der Erfindung betrifft ein Messsystem zum Ermitteln eines Füllstandes, einer Dichte, eines Durchflusses und/oder eines Druckes eines Mediums. Das Messsystem weist eine Messanordnung, so wie voranstehend und nachfolgend beschrieben, auf, welche ein Messgerät und ein Spezifikationsmodul aufweist. Ferner weist das Messsystem einen Behälter auf, wobei das Spezifikationsmodul örtlich getrennt von dem Messgerät an dem Behälter angeordnet ist.

Gemäß einer Ausführungsform der Erfindung weist das Messsystem ein tragbares Benutzergerät auf, wobei das Spezifikationsmodul einen QR-Code und/oder einen Barcode aufweist, in welchem die behälterspezifischen Daten kodiert sind. Das tragbare Benutzergerät ist dazu eingerichtet, durch Auslesen des QR-Codes und/oder des Barcodes die behälterspezifischen Daten zu ermitteln und ein mit den behälterspezifischen Daten korrelierendes Spezifikationssignal drahtlos an das Messgerät zu übermitteln. Ferner ist das Messgerät dazu eingerichtet, basierend auf dem Spezifikationssignal die dem Behälter und/oder dem Medium zugeordneten Parametrierdaten zu ermitteln, zu aktivieren und/oder zu laden. Dabei können die Parametrierdaten aus einem Speicher des Spezifikationsmoduls geladen und an das Messgerät übermittelt werden. Auch kann das Messgerät basierend auf dem Spezifikationssignal die dem Behälter und/oder dem Medium zugeordneten Parametrierdaten in einem Speicher des Messgeräts ermitteln und während der eigentlichen Messung verwenden, etwa zur Auswertung eines Messsignals. Auch können die Parametrierdaten auf einem Server hinterlegt sein und das Messgerät kann diese basierend auf dem Spezifikationssignal in dem Server ermitteln und/oder herunterladen.

Ein dritter Aspekt der Erfindung betrifft ein Verfahren zum Parametrieren eines Messgeräts gemäß dem angefügten unabhängigen Patentanspruch 11.

Im Folgenden werden Ausführungsbeispiele der Erfindung unter Bezugnahme auf die beigefügten Figuren beschrieben. Dabei können gleiche Bezugszeichen gleiche, gleichwirkende oder ähnliche Elemente bezeichnen.

### Kurze Beschreibung der Figuren

Fig. 1 zeigt ein Messsystem gemäß einem Ausführungsbeispiel der Erfindung.
Fig. 2 zeigt eine Messanordnung gemäß einem Ausführungsbeispiel der Erfindung.
Fig. 3 zeigt eine Messanordnung gemäß einem Ausführungsbeispiel der Erfindung.
Fig. 4 zeigt ein Flussdiagramm zur Illustration von Schritten eines Verfahrens zum Parametrieren eines Messgeräts gemäß einem Ausführungsbeispiel der Erfindung.

Die Darstellungen in den Figuren sind lediglich schematisch und nicht maßstabsgetreu.

### Detaillierte Beschreibung von Ausführungsbeispielen

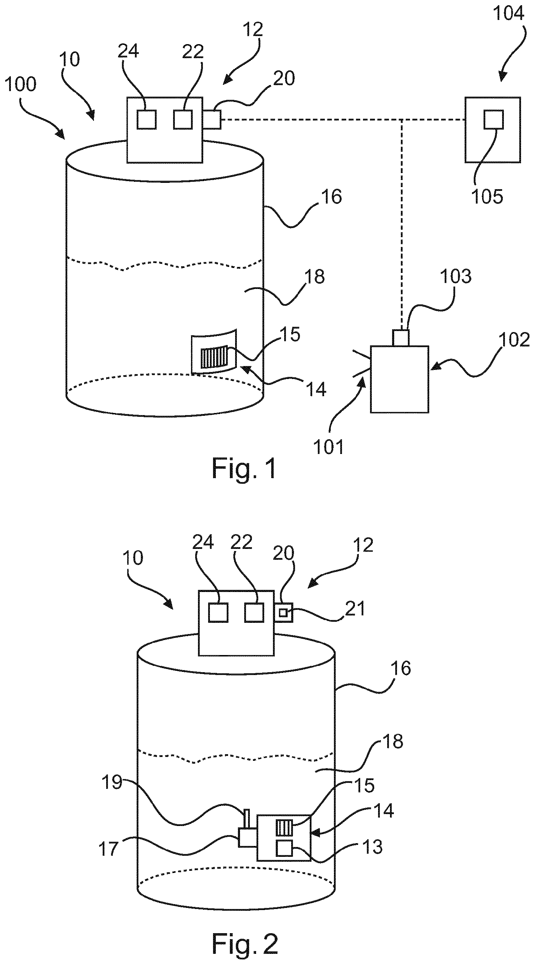

Fig. 1 zeigt ein Messsystem 100 gemäß einem Ausführungsbeispiel der Erfindung. Das Messsystem 100 weist eine Messanordnung 10 mit einem Messgerät 12 und einem Spezifikationsmodul 14 auf.

Das Messgerät 10 ist zum Ermitteln eines Füllstandes einer Dichte, eines Durchflusses und/oder eines Druckes eines Mediums 18 in einem Behälter ausgebildet. Insbesondere kann es sich bei dem Messgerät 12 um ein radarbasiertes Füllstandmessgerät und/oder ein Radarfüllstandmessgerät handeln. Das Messgerät 10 kann hierbei auch als Zwei-Leiter-Messgerät ausgestaltet sein.

Das Spezifikationsmodul 14 ist außenseitig an dem Behälter 16 angebracht, wobei das Spezifikationsmodul 14 etwa selbstklebend und/oder selbsthaftend ausgestaltet sein kann. Auch kann das Spezifikationsmodul 14 über ein Magnetelement an dem Behälter 16 angebracht und/oder befestigt sein. Das Spezifikationsmodul 14 und das Messgerät 12 sind als separate Bauteile ausgeführt und örtlich getrennt voneinander, unabhängig voneinander und/oder berührungslos an dem Behälter 16 angeordnet.

In dem Ausführungsbeispiel der Figur 1 weist das Spezifikationsmodul 14 einen Barcode 15 und/oder einen QR-Code 15 auf, welcher behälterspezifische Daten aufweist und/oder in welchem behälterspezifische Daten kodiert, hinterlegt und/oder verwaltet sind. Die behälterspezifischen Daten können beispielsweise eine Behälterspezifikation, eine Behälterkennung, eine Seriennummer, eine Geometrie des Behälters 16, eine Abmessung des Behälters 16, eine Höhe des Behälters 16, ein Volumen des Behälters 16, ein Leergewicht des Behälters 16, eine Spezifikation des in dem Behälter 16 bevorrateten Mediums 18, eine Dichte des in dem Behälter 16 bevorrateten Mediums 18, eine Konzentration eines Bestandteils des Mediums 18 und/oder eine Standortinformation des Behälters 16 umfassen. Die Standortinformationen können etwa Informationen bezüglich einer Messumgebung, einer Messgruppenzugehörigkeit, eines Anlagenteils und/oder geographische Daten umfassen.

Über ein tragbares Benutzergerät 102 kann der Code 15 visuell erkannt, ausgelesen und/oder dekodiert werden. Hierzu weist das Benutzergerät 102 eine Kamera 101 auf, welche von einem Benutzer zur optischen Aufnahme des Codes 15 an den Behälter 16 herangeführt werden kann. Das Benutzergerät 102 kann etwa ein Mobiltelefon, ein Tablet-PC, ein PC, ein Smartphone, ein Notebook und/oder ein Handheld sein.

Das Benutzergerät 102 kann die in dem Code 15 hinterlegten behälterspezifischen Daten lesen und ein mit den behälterspezifischen Daten korrelierendes Spezifikationssignal erstellen und über ein Kommunikationsmodul, insbesondere ein drahtloses Kommunikationsmodul 103, an das Messgerät 12 übermitteln.

Zum Empfang des Spezifikationssignals verfügt das Messgerät 12 über ein Kommunikationsmodul 20. Die Kommunikationsmodule 20, 103 des Messgeräts 12 und des Benutzergeräts 102 können insbesondere für eine drahtlose Kommunikation eingerichtet sein. Beispielsweise können die Kommunikationsmodule 20, 103 WLAN-Module, Funkmodule und/oder Bluetoothmodule sein. Auch kann das Spezifikationssignal über das Internet und/oder ein Telefonnetz von dem Benutzergerät 102 an das Messgerät 12 übermittelt werden.

Das Spezifikationssignal kann dabei die behälterspezifischen Daten repräsentieren und/oder diese enthalten. Mit anderen Worten können die behälterspezifischen Daten in Form des Spezifikationssignals von dem Benutzergerät 102 an das Messgerät 12 übermittelt werden. Auch kann ein Foto des Codes 15 an das Messgerät 12 übermittelt werden, und das Messgerät 12 kann den Code 15 dekodieren und darauf basierend die behälterspezifischen Daten ermitteln.

Zur Verarbeitung des Spezifikationssignals verfügt das Messgerät 12 ferner über einen Prozessor 22. Dabei ist das Messgerät 12 dazu eingerichtet, basierend auf dem Spezifikationssignal dem Behälter 16 und/oder dem Medium 18 zugeordnete Parametrierdaten zum Parametrieren des Messgeräts 12 zu ermitteln, zu aktivieren und/oder zu laden. Die Parametrierdaten können beispielsweise in einem Speicher 24 des Messgeräts 12 hinterlegt sein und das Messgerät 12 kann durch Verarbeitung des Spezifikationssignals die zugehörigen Parametrierdaten ermitteln und/oder auswählen. Das Messgerät 12 kann die zugehörigen Parametrierdaten anschließend während des Betriebs zur eigentlichen Ermittlung des Füllstandes, des Durchflusses, der Dichte und/oder des Druckes des Mediums 18 heranziehen. Allgemein können die Parametrierdaten und/oder die Parametrierung dazu dienen, das Messgerät 12 auf die jeweilige Messumgebung, den jeweiligen Behälter und/oder das jeweilige Medium 18 abzustimmen, damit der Füllstand, die Dichte, der Durchfluss und/oder der Druck des Mediums 18 in dem Behälter 16 mit hoher Präzision bestimmt werden kann. Hierzu können die Parametrierdaten Werte eines oder mehrerer Parameter, insbesondere messrelevanter Parameter, umfassen. Beispielsweise können die Parametrierdaten ein Störechoprofil des Behälters 16, ein Leerprofil des Behälters 16, eine Messbereichsangabe und/oder eine Linearisierungstabelle zur Umrechnung einer Distanz zu einer Oberfläche des Mediums 18 in eine Füllhöhe und/oder des aktuellen Volumens des Mediums 18 umfassen. Auch können die Parametrierdaten beliebige andere mit der eigentlichen Messung in Zusammenhang stehende Daten und/oder Parameterwerte umfassen.

Alternativ oder zusätzlich kann das Messgerät 12 basierend auf dem Spezifikationssignal eine entsprechende Anfrage an einen Server 104 senden und die Parametrierdaten zumindest teilweise von dem Server 104, etwa aus einem Speicher 105 des Servers 104, herunterladen.

In dem Speicher 24 des Messgeräts 12 und/oder dem Speicher 105 des Servers 104 können auch weitere Daten, wie etwa eine Betriebssoftware des Messgeräts 12, eine Betriebsanleitung und/oder Notizen hinterlegt sein, welche von dem Messgerät 12 aus dessen Speicher 24 und/oder über das Kommunikationsmodul 20 von dem Server 104 geladen werden können.

Alternativ oder zusätzlich können die behälterspezifischen Daten, die Parametrierdaten und/oder die weiteren Daten in einem Speicher 13 des Spezifikationsmoduls hinterlegt sein und über das Kommunikationsmodul 20 empfangen, übertragen und/oder ausgelesen werden, wie in nachfolgenden Figuren im Detail beschrieben.

Fig. 2 zeigt eine Messanordnung 10 gemäß einem Ausführungsbeispiel der Erfindung. Sofern nicht anders beschrieben weist die Messanordnung 10 der Figur 2 dieseleben Elemente und Merkmale wie die Messanordnung 10 der Figur 1 auf.

In dem Ausführungsbeispiel der Figur 2 verfügt das Spezifikationsmodul 14 über einen Speicher 13, in welchem die behälterspezifischen Daten und/oder die Parametrierdaten zumindest teilweise hinterlegt sind.

Das Spezifikationsmodul 14 weist zur drahtlosen Kommunikation mit dem Messgerät 12 ein Behälterkommunikationsmodul 17 auf. Das Behälterkommunikationsmodul 17 kann etwa einen RFID-Transponder 19 aufweisen und das Kommunikationsmodul 20 des Messgeräts 12 kann ein RFID-Modul 21 aufweisen, über welches der Speicher 13 des Spezifikationsmoduls 14 ausgelesen werden kann. Auch kann das RFID-Modul 21 des Messgeräts 12 zum Beschreiben des Speichers 13 des Spezifikationsmoduls 14 ausgebildet sein. Auch kann das RFID-Modul 12 zur Energieversorgung des RFID-Transponders 19 ausgebildet sein.

Das Messgerät 12 kann so über das RFID-Modul 21 und/oder das Kommunikationsmodul 20 eine drahtlose Kommunikationsverbindung zu dem Spezifikationsmodul 14 herstellen und den Speicher 13 auslesen. Dabei kann das Messgerät 12 die behälterspezifischen Daten aus dem Speicher 13 auslesen, welche somit das Spezifikationssignal bilden und/oder zumindest Teil davon sind. Basierend auf dem Spezifikationssignal und/oder den behälterspezifischen Daten ermittelt das Messgerät 12 die zugehörigen Parametrierdaten des Behälters 16 und/oder des Mediums 18 und lädt diese Parametrierdaten aus seinem Speicher 24, aus dem Speicher 105 des Servers und/oder aus dem Speicher 13 des Spezifikationsmoduls 14. Auch können die Parametrierdaten jeweils teilweise aus dem Speicher 24 des Messgeräts 12, aus dem, Speicher 13 des Spezifikationsmoduls 14 und/oder aus dem Speicher 105 des Servers 104 geladen werden.

Alternativ oder zusätzlich zur Datenübertragung über RFID, kann das Behälterkommunikationsmodul 17 ein WLAN-Modul, ein Funkmodul und/oder ein Bluetoothmodul aufweisen. Ebenso kann das Kommunikationsmodul 20 des Messgeräts 12 ein WLAN-Modul, ein Funkmodul und/oder ein Bluetoothmodul aufweisen, um eine drahtlose Kommunikationsverbindung zu dem Spezifikationsmodul 14 herzustellen und/oder den Speicher 13 des Spezifikationsmoduls 14 auszulesen. Analog dem voranstehend in Bezug auf RFID Beschriebenen, kann das Messgerät 12 über das WLAN-Modul, das Funkmodul und/oder das Bluetoothmodul die behälterspezifischen Daten aus dem Speicher 13 auslesen und erhält so das Spezifikationssignal, anhand dessen das Messgerät 12 die zugehörigen Parametrierdaten aus den Speichern 24, 105 und/oder 13 laden kann.

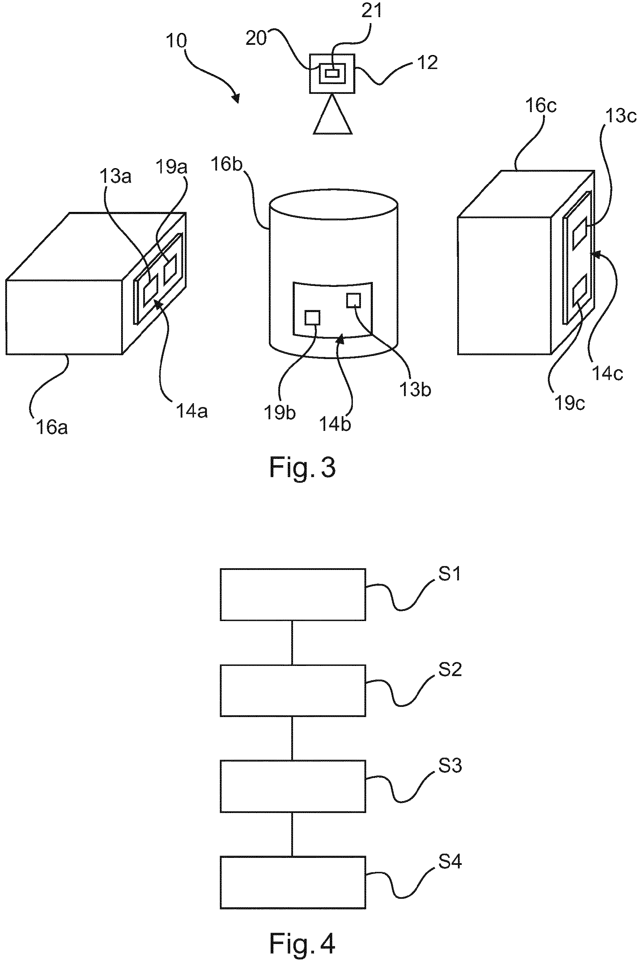

Fig. 3 zeigt eine Messanordnung 10 gemäß einem Ausführungsbeispiel der Erfindung. Sofern nicht anders beschrieben weist die Messanordnung 10 der Figur 3 dieselben Elemente und Merkmale wie die Messanordnungen 10 der Figuren 1 und 2 auf. Figur 3 illustriert insbesondere eine vorteilhafte Verwendung der erfindungsgemäßen Messanordnung 10.

Das Kommunikationsmodul 20 des Messgeräts 12 der Figur 3 weist ein RFID-Modul 21 auf. An jedem Behälter 16a, 16b, 16c ist außenseitig ein Spezifikationsmodul 14a, 14b, 14c angeordnet, welche jeweils einen RFID-Transponder 19a, 19b, 19c und einen Speicher 13a, 13b, 13c zum Speichern der behälterspezifischen Daten und/oder der zugehörigen Parametrierdaten aufweisen.

Im Folgenden ist eine mögliche Verwendung der Messanordnung 10 beschrieben. Ein Benutzer, etwa ein Kunde, baut und/oder erwirbt unterschiedliche Behälter und/oder eine neue Behälterserie. Es kann ein Messgerät 12 an einem Behälter 16b getestet werden, eine optimale Parametrierung und/oder optimale Parametrierdaten können ermittelt werden. Beispielsweise kann eine Linearisierung, ein Störechoprofil, ein Abgleich und/oder ein Leerprofil für den Behälter 16b ermittelt werden. Die Parametrierdaten können sodann in dem Speicher 24 des Messgeräts, dem Speicher 13b des Spezifikationsmoduls 14b und/oder dem Speicher 105 des Servers 104 hinterlegt werden. Der Benutzer kann für jeden der Behälter 16a, 16b, 16c ein Spezifikationsmodul 14a, 14b, 14c bereitstellen und auf den entsprechenden Speichern 13a, 13b, 13c die behälterspezifischen Daten und/oder die ermittelten Parametrierdaten hinterlegen. Die Behälter 16a, 16b, 16c können sodann mit den zugehörigen Spezifikationsmodulen 14a, 14b, 14c versehen werden. Zur eigentlichen Messung können dann Standardsensoren 12 und/oder nicht vorkonfigurierte Messgeräte 12 verwendet werden. Die Inbetriebnahme eines solchen Messgeräts 12 kann ohne PC am Messgerät 12 selbst erfolgen, insbesondere teilautomatisiert und/oder vollautomatisiert.

Während des Betriebes kann ein an dem Behälter 16b eingesetztes Messgerät 12 erkennen, dass ein Spezifikationsmodul 14b mit RFID-Transponder 19b in der Nähe ist, die behälterspezifischen Daten auslesen und so das Spezifikationssignal empfangen. Das Messgerät 12 kann dann basierend auf dem Spezifikationssignal die dem Behälter 16b zugeordneten Parametrierdaten aus dem Speicher 13b laden, aktivieren und/oder während der Messung verwenden. Die Parametrierdaten können dabei auch zumindest teilweise aus dem Speicher 24 des Messgeräts 12 und/oder einem Speicher 105 eines Servers 104 ausgelesen werden.

Wird der aktuelle Behälter 16b durch einen anderen Behälter 16a, 16c getauscht, so können die behälterspezifischen Daten, die Parametrierdaten und/oder weitere Daten für den neuen Behälter 16a, 16c aus dessen Spezifikationsmodul 14a, 14c ausgelesen werden und ins Messgerät 12 gespeichert werden. Auch hier können die Daten zumindest teilweise aus dem Speicher 24 des Messgeräts 12 und/oder einem Speicher 105 eines Servers 104 ausgelesen werden.

Ist das Messgerät 12 etwa defekt und/oder wird es getauscht, so kann jedes Messgerät 12, das sich beispielsweise im Lager befindet (nicht vorkonfiguriert) auf den Behälter 16a, 16b, 61c montiert werden und das neue Messgerät 12 kann anhand des aktuellen Behälters 16a, 16b, 16c und/oder basierend auf dem zugehörigen Spezifikationsmodul 14a-c konfiguriert und/oder parametriert werden.

Im Folgenden sind weitere Aspekte und/oder Vorteile der Erfindung zusammengefasst. Erfindungsgemäß werden behälterspezifische, benutzerspezifische und/oder kundenspezifische Parametrierungen bzw. Parametrierdaten (wie z.B. eine Linearisierung, ein spezieller Abgleich, ein Spezialparameter oder dergleichen) auf Spezifikationsmodule 14a, 14b, 14c übertragen. Die Spezifikationsmodule 14a, 14b, 14c können etwa als RFID-Karte ausgebildet sein und in die Nähe des Messgeräts 12 auf den Behälter 16a, 16b, 16c angebracht, etwa geklebt, werden. Die Parametrierdaten für die jeweiligen Behälter 16a, 16b, 16c können in den Speichern 13a, 13b, 13c der Spezifikationsmodule 14a-c hinterlegt werden. Befindet sich ein Messgerät 12 in Reichweite eines der Spezifikationsmodule 14b, kann das Messgerät 12 dies erkennen sowie die behälterspezifischen Daten, die Parametrierdaten und/oder weitere Daten ermitteln und/oder laden. Gleichsam kann sich das Messgerät 12 automatisch konfigurieren und/oder parametrieren.

Auch kann eine einmal erstellte Parametrierung und/oder einmal erstellte Parametrierdaten auf vielen gleichen Behälter 16a-c angebracht und/oder in den Spezifikationsmodule 14a-c verwaltet werden. Die Behälter 16a-c könnten bei der Fertigung schon mit dem entsprechenden Spezifikationsmodul 14a-c versehen werden. Wird später ein Messgerät 12 an einem der Behälter 16a-c verbaut, so kann dieses Messgerät 12 mit der zugehörigen Parametrierung bzw. mit den zugehörigen Parametrierdaten versehen werden, ohne dass eine Verbindungsaufnahme mit einem PC notwendig wäre. Auch könnten Spezifikationsmodule 13a-c für viele Behälter 16a-c reproduziert und/oder von Kunden erworben werden.

Wie voranstehend beschrieben, kann in dem Speicher 24 Messgeräts 12 und/oder in dem Speicher 105 des Servers 104 auch eine Vielzahl unterschiedlicher Parametrierungen bzw. unterschiedliche Parametrierdaten hinterlegt sein und das Messgerät 12 ermittelt basierend auf dem Spezifikationssignal und/oder den behälterspezifischen Daten die dem Behälter 16a-c zugeordneten Parametrierdaten und aktiviert diese, etwa durch Laden derselben in einen Arbeitsspeicher des Messgeräts 12. So kann das Messgerät 12 insbesondere für den aktuell zu messenden Behälter 16a-c die Geometrie, den Behälterinhalt, das Störechoprofil, den Messbereich und/oder andere behälterspezifische und messrelevante Daten ermitteln und in das Messgerät 12 laden und/oder schreiben. Auch könnte der aktuelle Ort oder die aktuelle Messumgebung, etwa ein Anlagenteil und/oder oder eine Messgruppenzughörigkeit, in das Messgerät 12 geladen und/oder geschrieben werden, etwa um das Messgerät 12 bei drahtloser Kommunikation zu identifizieren.

Auch die Betriebssoftware und/oder die Firmware des Messgeräts 12, z.B. die, mit der das Messgerät 12 in Betrieb genommen wurde, kann in dem Speicher 13a-c des Spezifikationsmoduls 14a-c, im Speicher 24 des Messgeräts 12 und/oder dem Speicher 105 des Servers 104 hinterlegt sein. So kann ein neues Messgerät 12 in den selben Softwarezustand versetzt werden, wie bei der Inbetriebnahme, auch wenn ein neu geliefertes Ersatzgerät schon eine neue Version programmiert hat. Werden auch Betriebsanleitungen und Notizen, die durch den Inbetriebnehmer während der Inbetriebnahme gemacht wurden, abgespeichert, können bei einem Ersatz des Messgeräts 12 sehr schnell die damals gemachten Daten eingesehen werden. Alternativ oder zusätzlich zu einer Verwaltung von Inbetriebnahmeprotokollen und Datensicherungen auf einem Server 104, könnte dies direkt am Behälter 16a-c über die Spezifikationsmodule 14a-c geschehen. Dies wäre insbesondere dann vorteilhaft, wenn Behälter 16a-c an einem anderen Ort in Betrieb genommen werden als sie dann zum Einsatz kommen.

Fig. 4 zeigt ein Flussdiagramm zur Illustration eines Verfahrens zum Parametrieren eines Messgeräts 12 gemäß einem Ausführungsbeispiel der Erfindung. Das Verfahren kann gleichsam ein Verfahren zum Betreiben einer Messanordnung 10 und/oder eines Messsystems 100, wie in voranstehenden Figuren beschrieben ist, bezeichnen.

In einem Schritt S1 werden behälterspezifische Daten zur Spezifikation eines Behälters 16 und/oder zur Spezifikation eines Mediums 18 in dem Behälter 16 aus einem an dem Behälter 16 angeordneten Spezifikationsmodul 14 ausgelesen. Dies kann durch visuelles Erkennen und/oder Dekodieren eines QR-Codes und/oder Barcodes 15 des Spezifikationsmoduls 14, etwa durch ein Benutzergerät 102, erfolgen. Alternativ oder zusätzlich kann das Spezifikationsmodul 14 einen RFID-Transponder 19, ein WLAN-Modul, ein Funkmodul und/oder ein Bluetothmodul aufweisen, über welches in dem Speicher 13 hinterlegte behälterspezifische Daten ausgelesen werden können.

In einem weiteren Schritt S2 wird ein Spezifikationssignal an das Messgerät 12 übermittelt. Das Spezifikationssignal kann dabei die behälterspezifischen Daten umfassen und/oder mit diesen korrelieren.

In einem weiteren Schritt S3 werden die dem Behälter 16 und/oder dem Medium 18 zugeordneten Parametrierdaten basierend auf dem Spezifikationssignal ermittelt. Die Parametrierdaten, und optional weitere Daten, können in dem Speicher 24 des Messgeräts 12, dem Speicher 105 des Servers 104 und/oder dem Speicher 13 des Spezifikationsmoduls 14 ermittelt und/oder identifiziert werden.

In einem weiteren Schritt S4 werden die dem Behälter 16 und/oder dem Medium 18 zugeordneten Parametrierdaten in dem Messgerät 12 aktiviert, etwa in einen Arbeitsspeicher geladen und/oder als aktive Parametrierdaten durch setzen eines Markers bzw. Flags gekennzeichnet, und bei der eigentlichen Messung, etwa zur Auswertung eines Messsignals herangezogen.

Ergänzend sei daraufhingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messanordnung (10), aufweisend:
ein Messgerät (12) zum Erfassen eines Füllstandes, einer Dichte, eines Durchflusses und/oder eines Druckes eines Mediums (18) in einem Behälter (16); und
ein Spezifikationsmodul (14), welches dazu ausgeführt ist, örtlich getrennt von dem Messgerät (12) befestigt zu werden;
wobei das Spezifikationsmodul (14) behälterspezifische Daten zur Spezifikation des Behälters (16) und/oder zur Spezifikation eines Mediums (18) in dem Behälter (16) aufweist;
wobei das Messgerät (12) ein drahtloses Kommunikationsmodul (20) aufweist, welches dazu eingerichtet ist, ein Spezifikationssignal zu empfangen, welches mit den behälterspezifischen Daten des Spezifikationsmoduls (14) korreliert;
wobei das Messgerät (12) dazu eingerichtet ist, basierend auf dem Spezifikationssignal dem Behälter (16) und/oder dem Medium (18) zugeordnete Parametrierdaten zu aktivieren; und
wobei das Spezifikationsmodul (14) einen RFID-Transponder (19) und einen Speicher (13) zum Hinterlegen der behälterspezifischen Daten aufweist; und
wobei das Kommunikationsmodul (20) des Messgeräts (12) ein RFID-Modul (21) zum Lesen und/oder Beschreiben des Speichers (13) des Spezifikationsmoduls (14) aufweist,
**dadurch gekennzeichnet, dass** das Spezifikationsmodul (14) dazu ausgeführt ist, zumindest teilweise an einer Außenseite des Behälters (16) befestigt zu werden;
dass das Spezifikationsmodul (14) zur Befestigung an dem Behälter (16) zumindest teilweise selbstklebend und/oder selbsthaftend ausgestaltet ist; dass die dem Behälter (16) zugeordneten Parametrierdaten zumindest teilweise in einem Speicher (105) eines Servers (104) hinterlegt sind; und
dass das Messgerät (12) dazu eingerichtet ist, basierend auf dem Spezifikationssignal die dem Behälter (16) zugeordneten Parametrierdaten zumindest teilweise von dem Server (104) herunterzuladen.

2. Messanordnung (10) nach Anspruch 1,
wobei die dem Behälter (16) zugeordneten Parametrierdaten zumindest teilweise in einem Speicher (24) des Messgeräts (12) hinterlegt sind; und
wobei das Messgerät (12) dazu eingerichtet ist, basierend auf dem Spezifikationssignal die dem Behälter (16) zugeordneten Parametrierdaten zu ermitteln.

3. Messanordnung (10) nach einem der voranstehenden Ansprüche,
wobei das Spezifikationsmodul (14) ein Behälterkommunikationsmodul (17) aufweist; und
wobei das Messgerät (12) dazu eingerichtet ist, über das Behälterkommunikationsmodul (17) eine drahtlose Kommunikationsverbindung zu dem Spezifikationsmodul (14) herzustellen und/oder das Spezifikationssignal von dem Spezifikationsmodul (14) zu empfangen.

4. Messanordnung (10) nach einem der voranstehenden Ansprüche,
wobei das Spezifikationsmodul (14) einen QR-Code (15), einen Barcode (15), ein WLAN-Modul, ein Bluetoothmodul und/oder den RFID-Transponder (19) aufweist.

5. Messanordnung (10) nach einem der voranstehenden Ansprüche,
wobei die behälterspezifischen Daten eine Behälterspezifikation, eine Behälterkennung, eine Geometrie des Behälters (16), eine Abmessung des Behälters, eine Höhe des Behälters, ein Volumen des Behälters, ein Leergewicht des Behälters, eine Spezifikation des in dem Behälter bevorrateten Mediums, eine Dichte des in dem Behälter bevorrateten Mediums, eine Konzentration eines Bestandteils des Mediums und/oder eine Standortinformation des Behälters umfassen; und/oder
wobei die Parametrierdaten ein Störechoprofil des Behälters (16), ein Leerprofil des Behälters, eine Messbereichsangabe und/oder eine Linearisierungstabelle zur Umrechnung einer Distanz zwischen dem Messgerät (12) und einer Oberfläche des Mediums (18) in eine Füllhöhe des Mediums umfassen.

6. Messanordnung (10) nach einem der voranstehenden Ansprüche,
wobei das Spezifikationsmodul (14) einen QR-Code (15) und/oder einen Barcode (15) aufweist, in welchem die behälterspezifischen Daten kodiert sind und welcher mit einem tragbaren Benutzergerät (102) ausgelesen werden kann; und/oder
wobei das Kommunikationsmodul (20) dazu eingerichtet ist, das Spezifikationssignal von einem tragbaren Benutzergerät (102) zu empfangen.

7. Messanordnung (10) nach einem der voranstehenden Ansprüche,
wobei das Spezifikationsmodul (14) einen Speicher (13) aufweist, in welchem eine Betriebssoftware des Messgeräts, eine Betriebsanleitung des Messgeräts und/oder während einer Inbetriebnahme des Messgeräts erstellte Notizen hinterlegt sind; und/oder
wobei das Messgerät (12) dazu eingerichtet ist, eine Betriebssoftware des Messgeräts, eine Betriebsanleitung des Messgeräts und/oder während einer Inbetriebnahme des Messgeräts erstellte Notizen zumindest teilweise aus einem Speicher (13) des Spezifikationsmoduls (14) auszulesen.

8. Messanordnung (10) nach einem der voranstehenden Ansprüche,
wobei das Messgerät ein radarbasiertes Füllstandmessgerät ist; und/oder
wobei das Messgerät als Zwei-Leiter-Messgerät ausgeführt ist.

9. Messsystem (100) zum Ermitteln eines Füllstandes, einer Dichte, eines Durchflusses und/oder eines Druckes eines Mediums (18), das Messsystem (100) aufweisend:
eine Messanordnung (10) nach einem der voranstehenden Ansprüche, welche ein Messgerät (12) und ein Spezifikationsmodul (14) aufweist; und
einen Behälter (16);
wobei das Spezifikationsmodul (14) örtlich getrennt von dem Messgerät (12) an dem Behälter (16) angeordnet ist.

10. Messsystem (100) nach Anspruch 9, weiter aufweisend:
ein tragbares Benutzergerät (102);
wobei das Spezifikationsmodul (14) einen QR-Code (15) und/oder einen Barcode (15) aufweist, in welchem die behälterspezifischen Daten kodiert sind; wobei das tragbare Benutzergerät (102) dazu eingerichtet ist, durch Auslesen des QR-Codes (15) und/oder des Barcodes (15) die behälterspezifischen Daten zu ermitteln und ein mit den behälterspezifischen Daten korrelierendes Spezifikationssignal drahtlos an das Messgerät (12) zu übermitteln; und
wobei das Messgerät (12) dazu eingerichtet ist, basierend auf dem Spezifikationssignal die dem Behälter (16) und/oder dem Medium (18) zugeordneten Parametrierdaten zu aktivieren.

11. Verfahren zum Parametrieren eines Messgeräts (12), das Verfahren aufweisend die Schritte:
Auslesen, mit dem Messgerät, von behälterspezifischen Daten zur Spezifikation eines Behälters (16) und/oder zur Spezifikation eines Mediums (18) in dem Behälter (16) aus einem zumindest teilweise an einer Außenseite des Behälters (16) angeordneten Spezifikationsmoduls (14), welches zur Befestigung an dem Behälter (16) zumindest teilweise selbstklebend und/oder selbsthaftend ausgestaltet ist, wobei das Spezifikationsmodul (14) einen RFID-Transponder (19) und einen Speicher (13) zum Hinterlegen der behälterspezifischen Daten aufweist; und
wobei das Messgerät (12) ein Kommunikationsmodul (20) mit einem RFID-Modul (21) zum Lesen und/oder Beschreiben des Speichers (13) des Spezifikationsmoduls (14) aufweist;
Übermitteln eines mit den behälterspezifischen Daten korrelierenden Spezifikationssignals an das Messgerät (12), welches örtlich getrennt von dem Spezifikationsmodul (14) an dem Behälter (16) angeordnet ist;
Ermitteln von dem Behälter (16) und/oder dem Medium (18) zugeordneten Parametrierdaten basierend auf dem Spezifikationssignal, wobei die dem Behälter (16) zugeordneten Parametrierdaten zumindest teilweise in einem Speicher (105) eines Servers (104) hinterlegt sind;
Herunterladen, durch das Messgerät von dem Server, zumindest eines Teils der dem Behälter (16) zugeordneten Parametrierdaten; und
Aktivieren der dem Behälter (16) und/oder dem Medium (18) zugeordneten Parametrierdaten in dem Messgerät (12).

## Claims

1. A measuring arrangement (10) comprising:
a measuring device (12) for obtaining a filling level, a density, a flow rate and/or a pressure of a medium (18) in a container (16);
and
a specification module (14) configured to be mounted in a location separate from the measuring device (12);
the specification module (14) comprising container-specific data for specification of the container (16) and/or specification of a medium (18) in the container (16);
wherein the measuring device (12) comprises a wireless communication module (20) configured to receive a specification signal, which correlates with the container-specific data of the specification module (14);
wherein the measuring device (12) is configured to activate parameterisation data associated with the container (16) and/or the medium (18) based on the specification signal; and
wherein the specification module (14) comprises an RFID transponder (19) and a memory (13) for storing the container-specific data; and
wherein the communication module (20) of the measuring device (12) comprises an RFID module (21) for reading and/or writing to the memory (13) of the specification module (14), **characterised in that** the specification module (14) is configured,
to be attached at least partially to an outer surface of the container (16);
**in that** the specification module (14) is configured to be at least partially self-adhesive and/or self-adhering for attachment to the container (16); #
**in that** the parameterisation data associated with the container (16) are at least partially stored in a memory (105) of a server (104); and
**in that** the measuring device (12) is configured, on the basis of the specification signal at least partially to download the parameterisation data associated with the container (16) from the server (104).

2. The measuring arrangement (10) according to claim 1,
wherein the parameterisation data associated with the container (16) is at least partially stored in a memory (24) of the measuring device (12); and
wherein the measuring device (12) is configured to determine the parameterisation data associated with the container (16) based on the specification signal.

3. The measuring arrangement (10) according to any of the preceding claims,
wherein the specification module (14) comprises a container communication module (17); and
wherein the measuring device (12) is configured to establish a wireless communication via the container communication module (17) with the specification module (14) and/or to receive the speciation signal from the speciation module (14).

4. The measuring arrangement (10) according to any of the preceding claims,
wherein the specification module (14) comprises a QR code (15), a bar code (15), a WLAN module, a Bluetooth module and/or the RFID transponder (19).

5. The measuring arrangement (10) according to any of the preceding claims,
wherein the container-specific data comprises a container specification, a container identification, a geometry of the container (16), a dimension of the container,
a height of the container, a volume of the container, an empty weight of the container, a specification of the medium stored in the container, a density of the medium stored in the container, a concentration of a constituent of the medium, and/or location information of the container (16);
and/or
wherein the parameterisation data comprise a perturbation echo profil of the container (16), an empty profil of the container, a measurement range information and/or a linearization table for converting a distance between the measurement device (12) and a surface of the medium (18) into a filling height of the medium.

6. The measuring arrangement (10) according to any of the preceding claims,
wherein the specification module (14) comprises a QR code (15) and/or a bar code (15) in which the container specific data is encoded and which may be read out with a portable user device (102); and/or
wherein the communication module (20) is configured to receive the specification signal from a portable user device (102).

7. The measuring arrangement (10) according to any of the preceding claims,
wherein the specification module (14) comprises a memory (13) in which an operating software of the measuring device, an operating manual of the measuring device and/or notes created during a setup of the measuring device are stored; and/or
wherein the measuring device (12) is configured to read out an operating software of the measuring device, an operating manual of the measuring device and/or notes created during setup of the measuring device at least partially from a memory (13) of the specification module (14).

8. The measuring arrangement (10) according to any of the preceding claims, wherein the measuring device is a radar-based filling level measuring device; and/or
wherein the measuring device is a two-wire measuring device.

9. A measuring system (100) for determining a filling level, a density, a flow rate and/or a pressure of a medium (18), comprising the measuring system (100):
a measuring arrangement (10) according to one of the preceding claims, comprising a measuring device (12) and a specification module (14); and
a container (16);
wherein the specification module (14) is arranged in a location separate from the measuring device (12) on the container (16).

10. The measuring system (100) according to claim 9, further comprising:
a portable user device (102);
wherein the specification module (14) comprises a QR code (15) and/or a bar code (15), in which the container specific data is encoded;
wherein the portable user device (102) is configured to determine the container-specific data by reading the QR code (15) and/or the barcode (15) and to send wirelessly a specification signal correlating with the container-specific data to the measuring device (12); and
wherein the measuring device (12) is configured to activate, based on the specification signal, the parameterisation data associated with the container (16) and/or the medium (18).

11. A method for parameterising a measuring device (12), the method comprising the steps of:
reading, with the measuring device, container-specific data for the specification of a container (16) and/or for the specification of a medium (18) in the container (16) from a specification module (14) being at least partially arranged on an outer surface of the container (16), the specification module (14) being configured to be at least partially self-adhesive and/or self adhering for attachment to the container (16),
wherein the specification module (14) comprises an RFID transponder (19) and a memory (13) for storing the container-specific data; and
wherein the measuring device (12) comprises a communication module (20) with an RFID module (21) for reading and/or writing to the memory (13) of the specification module (14);
transmitting a specification signal correlating with the container-specific data to the measuring device (12), which is arranged in a location separate from the specification module (14) on the container (16);
determining parameterisation data associated with the container (16) and/or the medium (18) based on the specification signal, wherein the parameterisation data associated with the container (16) are at least partially stored in a memory (105) of a server (104);
downloading, by the measuring device from the server, at least a part of the parameterisation data associated with the container (16); and
activating the parameterisation data associated with the container (16) and/or the medium (18) in the measuring device (12).

## Revendications

1. Agencement de mesure (10), présentant :
un appareil de mesure (12) pour détecter un niveau de remplissage, une densité, un débit et/ou une pression d'un milieu (18) dans un récipient (16) ; et
un module de spécification (14) qui est réalisé pour être fixé à un emplacement séparé de l'appareil de mesure (12) ;
dans lequel le module de spécification (14) présente des données spécifiques au récipient pour spécifier le récipient (16) et/ou pour spécifier un milieu (18) dans le récipient (16) ;
dans lequel l'appareil de mesure (12) présente un module de communication sans fil (20) qui est conçu pour recevoir un signal de spécification corrélé aux données spécifiques au récipient du module de spécification (14) ;
dans lequel l'appareil de mesure (12) est conçu pour activer des données de paramétrage associées au récipient (16) et/ou au milieu (18) sur la base du signal de spécification ; et
dans lequel le module de spécification (14) présente un transpondeur RFID (19) et une mémoire (13) pour stocker les données spécifiques au récipient ; et
dans lequel le module de communication (20) de l'appareil de mesure (12) présente un module RFID (21) pour lire et/ou écrire dans la mémoire (13) du module de spécification (14),
**caractérisé en ce**
**que** le module de spécification (14) est réalisé pour être fixé au moins partiellement sur un côté extérieur du récipient (16) ;
**que** le module de spécification (14) est conçu au moins partiellement autocollant et/ou auto-adhésif pour la fixation sur le récipient (16) ;
**que** les données de paramétrage associées au récipient (16) sont stockées au moins partiellement dans une mémoire (105) d'un serveur (104) ; et
**que** l'appareil de mesure (12) est conçu pour télécharger les données de paramétrage associées au récipient (16) sur la base du signal de spécification au moins partiellement à partir du serveur (104).

2. Agencement de mesure (10) selon la revendication 1,
dans lequel les données de paramétrage associées au récipient (16) sont stockées au moins partiellement dans une mémoire (24) de l'appareil de mesure (12) ; et
dans lequel l'appareil de mesure (12) est conçu pour déterminer les données de paramétrage associées au récipient (16) sur la base du signal de spécification.

3. Agencement de mesure (10) selon l'une des revendications précédentes,
dans lequel le module de spécification (14) présente un module de communication de récipient (17) ; et
dans lequel l'appareil de mesure (12) est conçu pour établir une liaison de communication sans fil avec le module de spécification (14) et/ou pour recevoir le signal de spécification du module de spécification (14) via le module de communication de récipient (17).

4. Agencement de mesure (10) selon l'une des revendications précédentes,
dans lequel le module de spécification (14) présente un code QR (15), un code à barres (15), un module WLAN, un module Bluetooth et/ou le transpondeur RFID (19).

5. Agencement de mesure (10) selon l'une des revendications précédentes,
dans lequel les données spécifiques au récipient comprennent une spécification de récipient, un identifiant de récipient, une géométrie du récipient (16), une dimension du récipient, une hauteur du récipient, un volume du récipient, un poids à vide du récipient, une spécification du milieu stocké dans le récipient, une densité du milieu stocké dans le récipient, une concentration d'un constituant du milieu et/ou des informations d'emplacement du récipient ; et/ou
dans lequel les données de paramétrage comprennent un profil d'écho parasite du récipient (16), un profil à vide du récipient, une indication de plage de mesure et/ou une table de linéarisation pour convertir une distance entre l'appareil de mesure (12) et une surface du milieu (18) en une hauteur de remplissage du milieu.

6. Agencement de mesure (10) selon l'une des revendications précédentes,
dans lequel le module de spécification (14) présente un code QR (15) et/ou un code à barres (15) dans lequel les données spécifiques au récipient sont codées et qui peut être lu par un appareil d'utilisateur portable (102) ; et/ou
dans lequel le module de communication (20) est conçu pour recevoir le signal de spécification d'un appareil d'utilisateur portable (102).

7. Agencement de mesure (10) selon l'une des revendications précédentes,
dans lequel le module de spécification (14) présente une mémoire (13) dans laquelle sont stockés un logiciel d'exploitation de l'appareil de mesure, un manuel d'utilisation de l'appareil de mesure et/ou des notes créées pendant une mise en service de l'appareil de mesure ; et/ou
dans lequel l'appareil de mesure (12) est conçu pour lire un logiciel d'exploitation de l'appareil de mesure, un manuel d'utilisation de l'appareil de mesure et/ou des notes créées pendant une mise en service de l'appareil de mesure au moins partiellement à partir d'une mémoire (13) du module de spécification (14).

8. Agencement de mesure (10) selon l'une des revendications précédentes,
dans lequel l'appareil de mesure est un appareil de mesure de niveau de remplissage basé sur la technologie radar ; et/ou
dans lequel l'appareil de mesure est réalisé sous la forme d'un appareil de mesure à deux fils.

9. Système de mesure (100) pour déterminer un niveau de remplissage, une densité, un débit et/ou une pression d'un milieu (18), le système de mesure (100) présentant :
un agencement de mesure (10) selon l'une des revendications précédentes, qui présente un appareil de mesure (12) et un module de spécification (14) ; et
un récipient (16) ;
dans lequel le module de spécification (14) est disposé sur le récipient (16) à un emplacement séparé de l'appareil de mesure (12).

10. Système de mesure (100) selon la revendication 9, présentant en outre :
un appareil d'utilisateur portable (102) ;
dans lequel le module de spécification (14) présente un code QR (15) et/ou un code à barres (15) dans lequel les données spécifiques au récipient sont codées ;
dans lequel l'appareil d'utilisateur portable (102) est conçu pour déterminer les données spécifiques au récipient en lisant le code QR (15) et/ou le code à barres (15) et pour transmettre sans fil un signal de spécification corrélé aux données spécifiques au récipient à l'appareil de mesure (12) ; et
dans lequel l'appareil de mesure (12) est conçu pour activer les données de paramétrage associées au récipient (16) et/ou au milieu (18) sur la base du signal de spécification.

11. Procédé de paramétrage d'un appareil de mesure (12), le procédé présentant les étapes consistant à :
lire, avec l'appareil de mesure, des données spécifiques au récipient pour spécifier un récipient (16) et/ou pour spécifier un milieu (18) dans le récipient (16) à partir d'un module de spécification (14) qui est disposé au moins partiellement sur un côté extérieur du récipient (16) et est conçu au moins partiellement autocollant et/ou auto-adhésif pour être fixé sur le récipient (16), le module de spécification (14) présentant un transpondeur RFLD (19) et une mémoire (13) pour stocker les données spécifiques au récipient ; et
dans lequel l'appareil de mesure (12) présente un module de communication (20) avec un module RFID (21) pour lire et/ou écrire dans la mémoire (13) du module de spécification (14) ; transmettre un signal de spécification corrélé aux données spécifiques au récipient à l'appareil de mesure (12) qui est disposé sur le récipient (16) à un emplacement séparé du module de spécification (14) ;
déterminer, sur la base du signal de spécification, des données de paramétrage associées au récipient (16) et/ou au milieu (18), les données de paramétrage associées au récipient (16) étant au moins partiellement stockées dans une mémoire (105) d'un serveur (104) ;
télécharger par l'appareil de mesure, à partir du serveur, au moins une partie des données de paramétrage associées au récipient (16) ; et
activer, dans l'appareil de mesure (12), les données de paramétrage associées au récipient (16) et/ou au milieu (18).
